# EUROPEAN PATENT SPECIFICATION

(11) **EP 3 559 117 B1**
(45) Date of publication and mention of the grant of the patent: **06.12.2023**
(21) Application number: 17812228.9
(22) Date of filing: 29.11.2017
(51) Int. Cl.: C08L 83/04

(54) **CURABLE SILICONE COMPOSITION**
HÄRTBARE SILIKONZUSAMMENSETZUNG
COMPOSITION DE SILICONE DURCISSABLE

(30) Priority: 20.12.2016 US 201662436493 P
(43) Date of publication of application: 30.10.2019
(73) Proprietor: Dow Silicones Corporation, Midland, MI 48686-0994 (US)
(72) Inventor: YEAKLE, Craig, Midland, MI 48640 (US); KADLEC, Donald, Midland, MI 48686-0994 (US); MCDONALD, Joel P., Midland, MI 48686-0994 (US)
(74) Representative: Murgitroyd & Company
(86) International application number: PCT/US2017/063589
(87) International publication number: WO 2018/118356

(56) References cited:
- EP-A1- 2 554 601

## Description

This invention relates to a curable silicone composition having good transmittance at ultraviolet portion of the electromagnetic spectrum.

Hydrosilylation curable silicone compositions comprising alkylsiloxane units are known, including encapsulants for light emitting diodes (LED), but the known compositions do not exhibit a combination of good mechanical properties and improved light transmission for UVA and UVC. Non-hydrosilylation curable silicone compositions comprising alkylsiloxanes can also be produced e.g., in JP2013253223. However, this reference teaches the use of hydrolysis and condensation reactions to form the cured siloxane matrix which limits the speed of cure and breadth of applications particularly applications that require rapid production of electronic devices.

The problem solved by this invention is the need for improved curable silicone compositions.

A hydrosilylation curable silicone sealant composition for encapsulation of optical semiconductors is disclosed in EP 2554601A1 which comprises various silicone resin components including at least a first silicone resin component having an alkenyl group and at least a second silicone resin component having a hydrogen atom directly bound to a silicon atom, and a hydrosilylation catalyst to promote a hydrosilylation reaction between these silicone resin components.

### Statement of the Invention

The present invention provides a curable silicone composition according to claim 1.

### Detailed Description

Percentages are weight percentages (wt%) and temperatures are in °C unless specified otherwise. Operations were performed at room temperature unless specified otherwise. Alkyl groups are saturated C₁-C₂₀ hydrocarbyl groups that may be straight or branched. Alkenyl groups are C₂-C₂₀ hydrocarbyl groups having at least one carbon-carbon double bond. Preferably, alkyl groups have from one to six carbon atoms. Preferably, alkenyl groups have one carbon-carbon double bond. Preferably, alkenyl groups have from two to six carbon atoms.

As used herein, unless otherwise indicated, molecular weights, Mₙ, M_{w} and M_{z} have the conventional meanings and are determined by gel permeation chromatography. Molecular weights are reported herein in units of g/mol.

For the resin type polysiloxane (A-2), preferably, "a," the fraction of R₃SiO_{1/2} units ("M units") is at least 0.25, preferably at least 0.3; preferably no more than 0.45, preferably no more than 0.4. Preferably, "b," the fraction of RSiO_{3/2} units ("T_{alkyl} units") is at least 0.25, preferably at least 0.3, preferably at least 0.35, preferably at least 0.4; preferably no more than 0.65, preferably no more than 0.6. Preferably, "c," the fraction of R'SiO_{3/2} units ("T_{alkenyl} units") is at least 0.03, preferably at least 0.04, preferably at least 0.05, preferably at least 0.06; preferably no more than 0.25, preferably no more than 0.2. Preferably, a+b+c is at least 0.93, preferably at least 0.95, preferably at least 0.97. When a+b+c is less than one, the remaining units are mostly silanol units. "R" groups on the siloxane units may in some cases be different on different siloxane units, and "R'" groups also may be different on different siloxane units, i.e., either or both of the polysiloxanes may be a mixture of different M units, T_{alkyl} units and T_{alkenyl} units. In a preferred embodiment, R represents the same alkyl group wherever it appears. Preferably R is C₁-C₁₀ alkyl, preferably C₁-C₆ alkyl, preferably methyl, ethyl or propyl; preferably methyl. Preferably, R' is C₂-C₁₀ alkenyl, preferably C₂-C₆ alkenyl, preferably C₂-C₄ alkenyl, preferably vinyl.

Preferably, the linear polysiloxane (A-1) has DP at least 100, preferably at least 200, preferably at least 300; preferably no more than 10000, preferably no more than 5000, preferably no more than 200. The linear polysiloxane has at least 2 R' groups, either located at the terminal end of the linear polysiloxane or pendent to the linear polysiloxane. Preferably, the other substituents on the linear polysiloxane are R groups. These R groups may be the same or different on different siloxane units; preferably they are the same. Preferably R is C₁-C₁₀ alkyl, preferably C₁-C₆ alkyl, preferably methyl, ethyl or propyl; preferably methyl. Preferably, R' is C₂-C₁₀ alkenyl, preferably C₂-C₆ alkenyl, preferably C₂-C₄ alkenyl, preferably vinyl. In one preferred embodiment, (A-1) has an average of at least two alkenyl groups in each molecule. (A-1) has a polymer form with a substantially straight chain molecular structure, but a portion of the molecular chain may be somewhat branched. Preferred alkenyl groups in (A-1) include, e.g., vinyl, allyl, isopropenyl, butenyl, pentenyl, hexenyl, and cyclohexenyl or a combination of any two or more thereof. The alkyl in (A-1) includes, e.g., methyl, ethyl, propyl, cyclopentyl, and cyclohexyl, or a combination of any two or more thereof.

In a preferred embodiment, (A-1) is a diorganopolysiloxane and may include, e.g., dimethylpolysiloxanes end blocked at both molecular chain terminals by dimethylvinylsiloxy groups, dimethylsiloxane-methylvinylsiloxane copolymers endblocked at both molecular chain terminals by dimethylvinylsiloxy groups, methylvinylpolysiloxanes endblocked at both molecular chain terminals by trimethylsiloxy groups, dimethylsiloxane-methylvinylsiloxane copolymers endblocked at both molecular chain terminals by trimethylsiloxy groups, or a combination of any two or more thereof.
Preferably, the viscosity of (A-1) at 25°C is from about 100 mPa·s to about 2,000,000 mPa·s or, more specifically, is from about 1,500 mPa·s to about 100,000 mPa·s or, even more specifically, is from about 2,000 mPa·s to about 80,000 mPa·s. When (A-1) is a mixture of two or more alkenyl-functional polyorganosiloxanes which may include high and low viscosity alkenyl-functional polyorganosiloxanes, the viscosity of this mixture at 25°C is from about 1,000 mPa·s to about 200,000 mPa·s.

Preferably, the vinyl-functional polydimethylsiloxane is a fluid having vinyl groups only on terminal ends and polysiloxane chain with an average degree of polymerization of about 25 to about 10,000, e.g. a formula of M^{Vi}₂D₂₅ to M^{Vi}₂D_{10,000}, where M^{Vi} is a siloxane unit including on average one vinyl group and two methyl groups, and D is a siloxane unit having two methyl groups. In a preferred embodiment, the vinyl-functional polydimethylsiloxane is a fluid having vinyl groups only on terminal ends and polysiloxane chain with an average degree of polymerization of 300 with a formula of M^{Vi}₂D₃₀₀, where M^{Vi} is a siloxane unit having on average one vinyl group and two methyl groups, and D is a siloxane unit having two methyl groups. In a preferred embodiment, the vinyl-functional polydimethylsiloxane is a fluid having vinyl groups only on terminal ends and polysiloxane chain with an average degree of polymerization of 165 with a formula of M^{Vi}₂D₁₆₅, where M^{Vi} is a siloxane unit having on average one vinyl group and two methyl groups, and D is a siloxane unit having two methyl groups. In a preferred embodiment, the vinyl-functional polydimethylsiloxane is a fluid having vinyl groups only on terminal ends and polysiloxane chain with an average degree of polymerization of 900 with a formula of M^{Vi}₂D₉₀₀, where M^{Vi} is a siloxane unit including on average one vinyl group and two methyl groups, and D is a siloxane unit having two methyl groups.

In some cases, an organopolysiloxane with a degree of polymerization of 900 or less may not provide sufficient viscosity and an organopolysiloxane with viscosity exceeding 1,000,000 mPas may be included in the composition, where without limitation, the vinyl is located at the terminal position and/or on pedant position and/or at side chain position on the molecular chain. For example, when the viscosity of (A-1) is less than 1,000 mPa·s (cP) at 25°C the material provided by the cured composition tends to have unsatisfactory flexibility and/or low tensile strength. In this example, a suitable amount of a high viscosity organopolysiloxane may be added to the composition to provide a satisfactory flexibility and/or high tensile strength. In one preferred embodiment, the high viscosity polyorganosiloxane has vinyl groups on the terminal ends only and a polysiloxane chain with an average degree of polymerization of 2000 to 15,000 with a formula of M^{Vi}₂D₂₀₀₀ to M^{Vi}₂D_{15,000}, wherein M^{Vi} is a siloxane unit having on average one vinyl group and two methyl groups, and D is a siloxane unit having two methyl groups.

The crosslinking agent has an average of at least three silicon-bonded hydrogen atoms in each molecule, wherein the silicon-bonded groups other than the silicon-bonded hydrogen are C₁₋₁₀ alkyl, in an amount that provides about 0.8 moles to about 2.5 moles silicon-bonded hydrogen per 1 mole of the total alkenyl in the organopolysiloxane. Preferably, the crosslinking agent itself is an organopolysiloxane comprising about 0.3 mass % to 2.0 mass % silicon-bonded hydrogen. Preferably, a straight chain organopolysiloxane containing R₂SiO_{2/2} units, R₃SiO_{1/2}, and HR₂SiO_{1/2} and/or HRSiO_{2/2} wherein the silicon-bonded R groups are C₁₋₁₀ alkyl.
Alternatively, a resin type organopolysiloxane containing SiO_{4/2} units and HR₂SiO_{1/2} units in a ratio ranging from about 1.50 to about 3.80 moles of HR₂SiO_{1/2} units per 1 mole of SiO_{4/2} units, wherein R is C₁₋₁₀ alkyl.

A hydrosilylation catalyst is present in the curable silicone composition preferably in a
catalytic quantity, preferably in an amount sufficient to promote curing of the composition. Suitable hydrosilylation catalysts include, without limitation, a platinum group metal which includes platinum, rhodium, ruthenium, palladium, osmium, or iridium metal or an organometallic compound thereof and a combination of any two or more thereof. In a preferred embodiment, the hydrosilylation catalyst is platinum black, platinum compounds such as chloroplatinic acid, chloroplatinic acid hexahydrate, a reaction product of chloroplatinic acid and a monohydric alcohol, platinum bis(ethylacetoacetate), platinum bis(acetylacetonate), platinum dichloride, and complexes of the platinum compounds with olefins or low molecular weight organopolysiloxanes or platinum compounds microencapsulated in a matrix or core-shell type structure.

Preferably, component A (A-1 + A-2) comprises from 20 to 70 wt% of a resin polysiloxane A-2; preferably at least 25wt%, preferably at least 30wt%; preferably no more than 60wt%, preferably no more than 50wt%, preferably no more than 40wt%. Preferably, the composition of component A comprises from 30 to 80wt% of a linear polysiloxane A-1; preferably at least 40wt%, preferably at least 50wt%; preferably no more than 75 wt%, preferably no more than 70wt%. The curable silicone resin comprises from 80 to 98 wt% of component A; preferably at least 85wt%, preferably at least 90 wt%; preferably no more than 97 wt%, preferably no more than 96 wt%. The curable silicone composition comprises at least 0.1 ppm of a hydrosilylation catalyst, preferably at least 1 ppm; and no more than 20 ppm, preferably no more than 10 ppm. Optionally, the curable silicone composition may further include one or more additional ingredients. The additional ingredient or combination of ingredients may include, for example, an hydrosilylation reaction inhibitor, a mold release agent, a filler, an adhesion promoter, a heat stabilizer, a flame retardant, a reactive diluent, an oxidation inhibitor, or a combination of any two or more thereof.

Optical device components may be produced using the composition as described herein by a method including shaping the composition and curing the composition to form a cured product, for example, for use in an optical device. Shaping the composition may be performed by injection molding, transfer molding, casting, extrusion, overmolding, compression molding, or cavity molding to produce a molded, cast, potted, dispensed, or extruded article. The method of shaping the composition will depend on various factors including a size and/or a shape of the optical device to be produced and the composition selected.

In one preferred embodiment, the cured composition can be used in an electronic or optical device application. The electronic or optical device can be a charged coupled device, a light emitting diode, a lightguide, an optical camera, a photo-coupler, or a waveguide, for example. In an optical device the cured composition preferably is used to facilitate evenly illuminating a surface of the optical device from which light is extracted.

The composition also may be used to form a highly transparent, cured silicone product. The highly transparent, cured silicone product is a molded, cast or extruded article and may include a substrate that forms a single article with a cured silicone layer. The composition may be applied to optical parts, including, without limitation, lens, reflectors, sheets, films, bars and tubing by any fabrication method. The composition may be used for electronics, displays, soft lithography, and medical and healthcare devices.

### EXAMPLES

The examples are intended to illustrate certain embodiments to one of ordinary skill in the art and should not be interpreted as limiting in the scope of the disclosure set forth in the claims. The samples were prepared for mechanical and optical evaluation by the following methods.

### Sample Preparation

The vinyl terminated polydimethylsiloxane, vinyl functional silicone resin, Pt catalyst, hydrogen functional cross-linker, and hydrosilylation inhibitor are added to a common vessel and mixed on a planetary mixer (Hauschild SpeedMixer DAZ 150FVZ) at 3,540 rpm for 20 seconds. The clear liquid was poured into aluminum molds (3.0mm thickness) and then press molded at 125°C for 30 minutes into a solid sample. The solid sample was removed from the mold and post cured at 150°C for 1 hour for mechanical property and optical property testing.

### Mechanical Testing

The measurement of mechanical properties was performed on an Instron Mechanical Tester in accordance to ASTM D412-06A at a speed of 2 in/min. Hardness was measured on a Shore A Durometer in accordance with ASTM D2240.

### Optical Testing

The optical properties of the samples were collected with a Perkin Elmer Lambda950 dual-beam spectrophotometer. The spectrophotometer was operated at a slow scanning speed, 1 nm slit width, over a wavelength range from 200-800 nm. The reported transmittance values are not corrected for surface reflections (so called Frensel reflections) due to refractive index differences between the air and the silicone article.

### Thermal Aging

Samples were aged at 150°C in a closed oven for 500 hours.

### Mass Averaged Molecular Weight Evaluation

The alkenyl-functional resins were analyzed by triple detection gel permeation chromatography for molecular weight determination. The chromatographic equipment consisted of a Waters 515 pump, a Waters 717 autosampler and a Waters 2410 differential refractometer. The separation was made with two (300 mm x 7.5 mm) Polymer Laboratories PLgel 5 µm Mixed-C columns (molecular weight separation range of 200 to 2,000,000), preceded by a PLgel 5 µm guard column (50 mm x 7.5 mm). The analyses were performed using HPLC grade toluene flowing at 1.0 mL/min as the eluent, and the columns and detector were both controlled at 45 °C. The samples were prepared in toluene at 5 mg/mL, solvated at room temperature for about three hours with occasional shaking, and filtered through 0.45 µm PTFE syringe filters prior to analysis. An injection volume of 75 µL was used and data was collected for 25 minutes. Data collection and analyses were performed using ThermoLabsystems Atlas chromatography software and Polymer Laboratories Cirrus GPC software. Molecular weight averages were determined relative to a calibration curve (3^{rd} order) created using polystyrene standards covering the molecular weight range of 580 - 2,300,000.

### Examples/Tables

| ***Table 1: Compositions and Formulations*** | | | | | | | | | | |
|---|---|---|---|---|---|---|---|---|---|---|
| Ex. | Siloxane Resin Composition Design (A-2) | siloxane resin Mw (A-2) | A-1-1 (g) | A-1-2 (g) | A-1-3 (g) | A-2 (g) | B (g) | C (ppm) | Total Mass (g) | SiH: Vi |
| **1** | T^{Me}_{0.50}T^{Vi}_{0.20}M^{Me3}_{0.30} | 5260 | 52.75 | 2.50 | 2.24 | 28.43 | 6.36 | 4.4 | 92.28 | 0.8 |
| **2** | T^{Me}_{0.60}T^{Vi}_{0.10}M^{Me3}_{0.30} | 5250 | 52.75 | 2.50 | 2.28 | 28.43 | 6.36 | 4.4 | 92.32 | 1.4 |
| **3** | T^{Me}_{0.45}T^{Vi}_{0.20}M^{Me3}_{0.35} | 33300 | 52.75 | 2.47 | 2.39 | 28.43 | 6.37 | 4.5 | 92.41 | 0.9 |
| **4** | T^{Me}_{0.55}T^{Vi}_{0.10}M^{Me3}_{0.35} | 2540 | 52.75 | 2.47 | 2.26 | 28.44 | 6.37 | 4.4 | 92.29 | 1.5 |
| **5** | T^{Me}_{0.55}T^{Vi}_{0.06}M^{Me3}_{0.39} | 3210 | 52.80 | 2.48 | 2.32 | 28.43 | 6.36 | 4.4 | 92.39 | 2.3 |
| **6** | T^{Me}_{0.40}T^{Vi}_{0.20}M^{Me3}_{0.40} | 2450 | 52.74 | 2.46 | 2.24 | 28.43 | 6.37 | 4.0 | 92.24 | 0.9 |
| **7** | T^{Me}_{0.55}T^{Vi}_{0.15}M^{Me3}_{0.30} | 1880 | 52.78 | 2.46 | 2.25 | 28.44 | 6.37 | 4.0 | 92.30 | 1.0 |
| | | | | | | | | | | |
| **C. Ex.** | Q_{0.55}M^{Me3}_{0.40}M^{Vi}_{0.05} | 23400 | 52.75 | 2.46 | 2.24 | 28.43 | 6.36 | 4.2 | 92.24 | 2.7 |

| ***Table 2: Optical transmission at wavelength of 265nm through a thickness of 3mm* (*aged* = *150°C for 500 hours)*** | | | | |
|---|---|---|---|---|
| Example | Siloxane Resin Composition Design (A-2) | Initial Transmission at 265nm (%) | Aged Transmission at 265nm (%) | Change in Transmission at 265nm (%) |
| **1** | T^{Me}_{0.50}T^{Vi}_{0.20}M^{Me3}_{0.30} | 70.7 | 40.2 | 30.5 |
| **2** | T^{Me}_{0.60}T^{Vi}_{0.10}M^{Me3}_{0.30} | 76.5 | 73.6 | 3.0 |
| **3** | T^{Me}_{0.45}T^{Vi}_{0.20}M^{Me3}_{0.35} | 68.3 | 46.3 | 22.0 |
| **4** | T^{Me}_{0.55}T^{Vi}_{0.10}M^{Me3}_{0.35} | 79.7 | 75.6 | 4.1 |
| **5** | T^{Me}_{0.55}T^{Vi}_{0.06}M^{Me3}_{0.39} | 80.5 | 72.8 | 7.7 |
| **6** | T^{Me}_{0.40}T^{Vi}_{0.20}M^{Me3}_{0.40} | 74.2 | 48.0 | 26.2 |
| **7** | T^{Me}_{0.55}T^{Vi}_{0.15}M^{Me3}_{0.30} | 76.5 | 60.2 | 16.2 |
| | | | | |
| **C. Ex.** | Q_{0.55}M^{Me3}_{0.40}M^{Vi}_{0.05} | 60.5 | 31.6 | 29.0 |

| ***Table 3: Mechanical properties*** | | | | | | | |
|---|---|---|---|---|---|---|---|
| Ex. | Siloxane Resin Composition Design (A-2) | Initial Durometer (Shore A) | Aged Durometer (Shore A) | Initial Elongation to Break (%) | Aged Elongation to Break (%) | Young's Modulus (MPa) | Aged Young's Modulus (MPa) |
| **1** | T^{Me}_{0.50}T^{Vi}_{0.20}M^{Me3}_{0.30} | 49 | 67 | 83 | | 14.4 | |
| **2** | T^{Me}_{0.60}T^{Vi}_{0.10}M^{Me3}_{0.30} | 59 | 65 | 46 | 34 | 9.5 | 10.7 |
| **3** | T^{Me}_{0.45}T^{Vi}_{0.20}M^{Me3}_{0.35} | 45 | 62 | 63 | 4 | 5.8 | 19.9 |
| **4** | T^{Me}_{0.55}T^{Vi}_{0.10}M^{Me3}_{0.35} | 55 | 62 | 48 | 41 | 8.6 | 11.0 |
| **5** | T^{Me}_{0.55}T^{Vi}_{0.06}M^{Me3}_{0.39} | 40 | 47 | 70 | 51 | 4.8 | 3.6 |
| **6** | T^{Me}_{0.40}T^{Vi}_{0.20}M^{Me3}_{0.40} | 35 | 60 | 62 | 45 | 1.9 | 10.4 |
| **7** | T^{Me}_{0.55}T^{Vi}_{0.15}M^{Me3}_{0.30} | 51 | 66 | 46 | 43 | 4.4 | 18.3 |
| | | | | | | | |
| **C. Ex.** | Q_{0.55}M^{Me3}_{0.40}M^{Vi}_{0.05} | 57 | 67 | 55 | 42 | 17.1 | 16.1 |

The cured silicone compositions of this invention exhibit excellent light transmission in the UVC wavelength range while surprisingly retaining mechanical properties.

## Claims

1. A curable silicone composition comprising:
(A-1) a linear polysiloxane having an average degree of polymerization (DP) from 25 to 10,000 and comprising from 2-25 R' groups;
(A-2) a resin type polysiloxane containing units having structures (R₃SiO_{1/2})ₐ, (RSiO_{3/2})_{b}, and (R'SiO_{3/2})_{c} where R is alkyl, and R' is alkenyl; where subscripts a, b, and c each shows the molar ratio of structures (R₃SiO_{1/2}), (RSiO_{3/2}), and (R'SiO_{3/2}) respectively within a resin-type polysiloxane molecule, a+b+c is from 0.90 to 1, and 0.2<a<0.5, 0.2<b<0.7, 0.02<c<0.3, wherein the sum of the weight of (A-1) and (A-2) is from 80 to 98 wt% of the curable silicone composition;
(B) a crosslinker having an average of at least three silicon-bonded hydrogen atoms in each molecule, wherein the silicon-bonded groups other than the silicon-bonded hydrogen are C₁₋₁₀ alkyl, in an amount that provides about 0.8 moles to about 2.5 moles silicon-bonded hydrogen per 1 mole of the total alkenyl in the organopolysiloxane; and
(C) 0.1-20 ppm of a hydrosilylation catalyst.

2. The composition of claim 1 in which R' groups in (A-1) are only on terminal chain units.

3. The composition of any one of claims 1- 2 in which (A-1) + (A-2) comprises 40 to 80 wt% (A-1) and 20 to 60 wt% (A-2).

4. The composition of any one of claims 1 - 3 in which the hydrosilylation catalyst comprises a platinum-group metal.

5. The composition of any one of claims 1 - 4 in which 0.25<a<0.45, 0.3<b<0.65, 0.06<c<0.25.

6. The composition of any one of claims 1 - 5 wherein subscript c is less than 0.2.

7. An optical device component or optical part comprising the cured composition of claim 1.

8. An optical device comprising the optical device component or optical part of claim 7.

## Patentansprüche

1. Härtbare Silikonzusammensetzung, umfassend:
(A-1) ein lineares Polysiloxan, das einen durchschnittlichen Polymerisationsgrad (DP) von 25 bis 10.000 aufweist, und umfassend von 2-25 R'-Gruppen;
(A-2) ein Polysiloxan eines Harz-Typs, das Einheiten enthält, die Strukturen (R₃SiO_{1/2})ₐ, (RSiO_{3/2})_{b} und (R'SiO_{3/2})_{c} aufweisen, wobei R Alkyl ist und R' Alkenyl ist; wobei die tiefgestellten Zeichen a, b und c jeweils das Molverhältnis von Strukturen (R₃SiO_{1/2}), (RSiO_{3/2}) und (R'SiO_{3/2}) anzeigen, die jeweils innerhalb eines Polysiloxanmoleküls eines Harz-Typs liegen, a+b+c von 0,90 bis 1 beträgt und 0,2<a<0,5, 0,2<b<0,7, 0,02<c<0,3, wobei die Summe des Gewichts von (A-1) und (A-2) zu 80 bis 98 Gew.-% die härtbare Silikonzusammensetzung ist;
(B) einen Vernetzer, der einen Durchschnitt von mindestens drei siliziumgebundenen Wasserstoffatomen in jedem Molekül aufweist, wobei die siliziumgebundenen Gruppen, außer dem siliziumgebundenen Wasserstoff, C₁₋₁₀-Alkyl in einer Menge sind, die etwa 0,8 Mol bis etwa 2,5 Mol siliziumgebundenen Wasserstoff pro 1 Mol des gesamten Alkenyls in dem Organopolysiloxan bereitstellt; und
(C) 0,1-20 ppm eines Hydrosilylierungskatalysators.

2. Zusammensetzung nach Anspruch 1, wobei R'-Gruppen in (A-1) nur auf Endketteneinheiten sind.

3. Zusammensetzung nach einem der Ansprüche 1 bis 2, wobei (A-1)+(A-2) zu 40 bis 80 Gew.-% (A-1) und zu 20 bis 60 Gew.-% (A-2) umfasst.

4. Zusammensetzung nach einem der Ansprüche 1 bis 3, wobei der Hydrosilylierungskatalysators ein Platingruppenmetall umfasst.

5. Zusammensetzung nach einem der Ansprüche 1 bis 4, wobei 0,25<a<0,45, 0,3<b<0,65, 0,06<c<0,25.

6. Zusammensetzung nach einem der Ansprüche 1 bis 5, wobei das tiefgestellte Zeichen c kleiner als 0,2 ist.

7. Komponente einer optischen Vorrichtung oder optischer Teil, umfassend die gehärtete Zusammensetzung nach Anspruch 1.

8. Optische Vorrichtung, umfassend die Komponente der optischen Vorrichtung oder den optischen Teil nach Anspruch 7.

## Revendications

1. Composition de silicone durcissable comprenant :
(A-1) un polysiloxane linéaire ayant un degré moyen de polymérisation (DP) de 25 à 10 000 et comprenant des groupes 2-25 R' ;
(A-2) une unité contenant un polysiloxane de type résine ayant des structures (R₃SiO_{1/2})ₐ, (RSiO_{3/2})_{b} et (R'SiO_{3/2})_{c} où R est alkyle, et R' est un alcényle ; où les indices a, b et c représentent chacun le rapport molaire des structures (R₃SiO_{1/2}), (RSiO_{1/2}), et (R'SiO_{3/2}) respectivement dans une molécule polysiloxane de type résine, a + b + c va de 0,90 à 1, et 0,2 < a< 0,5, 0,2 < b < 0,7, 0,02 < c < 0,3, dans laquelle la somme du poids de (A-1) et (A-2) va de 80 à 98 % en poids de la composition de silicone durcissable ;
(B) un agent de réticulation ayant une moyenne d'au moins trois atomes d'hydrogène liés à du silicium dans chaque molécule, dans laquelle les groupes liés à du silicium autres que l'hydrogène lié au silicium sont un alkyle en C₁ à C₁₀ en une quantité qui fournit environ 0,8 mole à environ 2,5 moles d'hydrogène lié à du silicium pour 1 mole de l'alcényle total dans l'organopolysiloxane ; et
(C) 0, 1 à ppm d'un catalyseur d'hydrosilylation.

2. Composition selon la revendication 1 dans laquelle les groupes R' dans (A-1) ne sont que sur des unités de chaîne terminale.

3. Composition selon l'une quelconque des revendications 1 à 2, dans laquelle (A-1) + (A-2) comprend 40 à 80 % en poids de (A-1) et à 60 % en poids de (A-2).

4. Composition selon l'une quelconque des revendications 1 à 3 dans laquelle le catalyseur d'hydrosilylation comprend un métal du groupe du platine.

5. Composition selon l'une quelconque des revendications 1 à 4 dans laquelle 0,25 < a < 0,45, 0,3 < b < 0,65, 0,06 < c < 0,25.

6. Composition selon l'une quelconque des revendications 1 à 5 dans laquelle l'indice c est inférieur à 0,2.

7. Composant de dispositif optique ou partie optique comprenant la composition durcie selon la revendication 1.

8. Dispositif optique comprenant le composant de dispositif optique ou partie optique selon la revendication 7.
